# FASCICULE DE BREVET EUROPEEN

(11) **EP 3 007 977 B1**
(45) Date de publication et mention de la délivrance du brevet: **31.05.2017**
(21) Numéro de dépôt: 14731219.3
(22) Date de dépôt: 13.06.2014
(51) Int. Cl.: B64D 27/24, B64D 29/02, B64D 33/08, B64D 33/02, B64D 33/10

(54) **ENSEMBLE DE PROPULSION ÉLECTRIQUE POUR AÉRONEF**
ELEKTRISCHE ANTRIEBSANORDNUNG FÜR EIN FLUGZEUG
ELECTRIC PROPULSION ASSEMBLY FOR AN AIRCRAFT

(30) Priorité: 14.06.2013 FR 1355557
(43) Date de publication de la demande: 20.04.2016
(73) Titulaire: Airbus Group SAS, 31700 Blagnac (FR)
(72) Inventeur: JOUBERT, Emmanuel, F-92130 Issy Les Moulineaux (FR); SMAOUI, Hichem, F-75014 Paris (FR); NESPOULOUS, Charles, F-92210 Saint-cloud (FR); RECHAIN, Bruno, 92270 Bois-Colombes (FR)
(74) Mandataire: Deschamps, Samuel
(86) Numéro de dépôt international: PCT/EP2014/062426
(87) Numéro de publication internationale: WO 2014/198923

(56) Documents cités:
- EP-A2- 1 524 190
- GB-A- 2 152 147
- GB-A- 2 389 174
- US-A- 3 957 230
- US-A1- 2009 272 854

## Description

### Domaine de l'invention

La présente invention concerne un ensemble de propulsion électrique pour aéronef présentant une architecture originale pour le refroidissement de son système électronique de puissance.

Elle vise encore un aéronef pourvu d'un tel ensemble de propulsion électrique.

### Arrière-plan technologique

L'aéronautique est un domaine technique en constante évolution et toujours à la recherche de progrès technologiques. C'est dans cette démarche que s'inscrivent aujourd'hui des travaux de recherche visant à réduire l'impact environnemental du transport aérien, et notamment du bruit et de l'émission de gaz à effet de serre.

Dans ce cadre, les concepts de motorisation hybride mécanique/électrique ou totalement électrique sont très prometteurs. On connaît ainsi de petits avions tels que des avions de tourisme biplace, entièrement propulsés par énergie électrique. Un ensemble de propulsion électrique est connu de US 2009/272854 A1, qui est considéré comme l'art antérieur le plus proche et décrit les caractéristiques du préambule de la revendication 1. Le besoin de disposer de puissances de propulsion plus élevées pour des avions plus importants résulte en une augmentation significative de la quantité de chaleur dissipée par les systèmes électroniques de puissance servant à gérer et contrôler la quantité d'énergie électrique délivrée à la motorisation électrique.

Il existe aujourd'hui différentes solutions techniques pour refroidir les systèmes électroniques de puissance.

On connaît ainsi des systèmes électroniques de puissance intégrant des systèmes de refroidissement à eau ou encore à fluide frigorigène de type diphasique.

Toutefois, toutes ces solutions de l'état de l'art sont pénalisantes en raison du poids supplémentaire (liquide, circuit de rebouclage, ...) qu'elles apportent aux systèmes électroniques de puissance.

Il est encore connu de mettre en oeuvre un ou plusieurs ventilateurs pour évacuer la chaleur générée par un système électronique de puissance.

Toutefois, une telle solution n'est pas applicable dans le domaine aéronautique en raison du surpoids important qu'imposerait le recours à une telle solution pour évacuer les dissipations thermiques d'un système électronique de puissance d'un groupe propulseur d'un aéronef de grandes dimensions.

De plus, le poids des différents câbles servant à l'alimentation en énergie électrique ou à transmettre les signaux de commande électrique, par exemple, représente un facteur important dans le poids global du groupe propulseur, ce poids étant pénalisant pour la charge utile de l'avion.

Il serait donc intéressant de définir un groupe propulseur présentant une architecture originale pour le refroidissement de son système électronique de puissance et limitant également le poids des câbles de manière générale et des câbles d'alimentation électrique en particulier.

La présente invention vise à pallier les divers inconvénients ci-dessus exposés en proposant un groupe propulseur particulièrement simple dans sa conception et dans son mode opératoire, et autorisant un refroidissement efficace de son système électronique de puissance.

Un autre objet de la présente invention est une diminution du poids lié au câblage du groupe propulseur.

### BREVE DESCRIPTION DE L'INVENTION

A cet effet, l'invention concerne un ensemble de propulsion pour aéronef selon la revendication 1, comprenant une nacelle comportant un capot de nacelle délimitant un volume interne dans lequel est disposée une unité de propulsion électrique de l'aéronef comprenant une soufflante, un ensemble moteur électrique placé après ladite unité de propulsion et relié à cette dernière pour alimenter en énergie électrique ladite unité de propulsion lorsqu'elle est en fonctionnement et un système de contrôle comportant un système électronique de puissance, l'espace délimité entre ledit ensemble moteur et ledit capot de nacelle définissant un conduit dans lequel est destiné à s'écouler un flux d'air créé par ladite soufflante lorsqu'elle est en fonctionnement pour fournir une poussée audit aéronef.

Selon l'invention,
- ledit système électronique de puissance comporte au moins un échangeur de chaleur permettant de transférer de l'énergie thermique dudit système vers un fluide de travail afin de refroidir ledit système, et
- ledit au moins un échangeur est placé au moins en partie en saillie dans ledit conduit de sorte que ledit fluide de travail est constitué dudit flux d'air généré par ladite soufflante lorsqu'elle est en fonctionnement.

Le système électronique de puissance étant logé dans la nacelle, il est ainsi possible de tirer pleinement avantage du flux d'air forcé généré par la soufflante. L'air à l'entrée de la nacelle est en effet accéléré par la soufflante de manière à générer un flux d'air participant à la poussée de l'aéronef, ce flux d'air augmentant l'efficacité de l'échangeur placé sur son trajet. Il en résulte une optimisation possible en termes de masse et de volume de cet échangeur conduisant à une diminution de sa masse.

Un autre avantage technique résultant du logement du système électronique dans la nacelle est que ce dernier est placé au plus près de l'ensemble moteur électrique réduisant de fait le poids lié au câblage de l'ensemble de propulsion.

Dans différents modes de réalisation particuliers de cet ensemble, chacun ayant ses avantages particuliers et susceptibles de nombreuses combinaisons techniques possibles:
- ledit système électronique de puissance comprend un module électronique de puissance et une carte de pilotage électronique reliés audit au moins un échangeur de chaleur pour évacuer les dissipations de puissance par effet Joule de ces éléments, l'ensemble formé par ledit module et ladite carte étant logé dans ledit capot de nacelle.

Cet ensemble formé par ledit module et ladite carte, est reçu dans un logement défini entre une paroi interne et une paroi externe dudit capot de nacelle.
- ladite nacelle définissant un axe longitudinal et ledit ensemble moteur étant relié à ladite nacelle par un ou plusieurs jeux de bras orientés radialement ou sensiblement radialement par rapport audit axe longitudinal, au moins les câbles mis en oeuvre pour les connexions électriques et/ou pour la transmission des signaux de commande passent dans au moins certains desdits bras. Selon l'invention ladite nacelle définit un axe longitudinal et ledit ensemble moteur est relié à ladite nacelle par un ou plusieurs jeux de bras orientés radialement ou sensiblement radialement par rapport audit axe longitudinal, au moins certains desdits bras comportent au moins une écope de refroidissement pour dévier une partie du flux d'air créé par ladite soufflante vers ledit ensemble moteur en vue de son refroidissement.

Chaque écope présente avantageusement une face avant orientée vers le flux d'air arrivant de la soufflante vers le bras correspondant pour dévier une partie de celui-ci vers ledit ensemble moteur en vue de son refroidissement. Cette face avant est, par exemple, partiellement bombée pour définir une rampe orientée vers ledit ensemble moteur.
- ledit échangeur de chaleur comporte des ailettes, lesdites ailettes étant agencées de sorte à être placées dans le sens d'écoulement du flux d'air créé par ladite soufflante de manière à ne pas perturber celui-ci,
- ladite soufflante comportant des pales mobiles en rotation, chacune desdites pales présentant un pas réglable, ladite unité de propulsion électrique comporte un dispositif d'ajustement permettant d'ajuster le pas de chacune desdites pales de la soufflante de manière à conserver le meilleur rendement possible,
- ledit système électronique de puissance comporte également un dispositif de refroidissement complémentaire pour assurer son refroidissement.

Ce dispositif de refroidissement complémentaire est par exemple un ventilateur relié électriquement audit ensemble moteur.

La présente invention vise encore un aéronef équipé d'au moins un ensemble de propulsion électrique.

Selon l'invention, cet ensemble de propulsion électrique est un ensemble de propulsion tel que décrit précédemment.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 est une vue en perspective d'un ensemble de propulsion selon un mode de réalisation particulier de la présente invention,
- la figure 2 est une vue en coupe longitudinale de l'ensemble de la Fig. 1 ;

### DESCRIPTION DETAILLEE DE MODES DE REALISATION DE L'INVENTION

On notera tout d'abord que les figures ne sont pas à l'échelle.

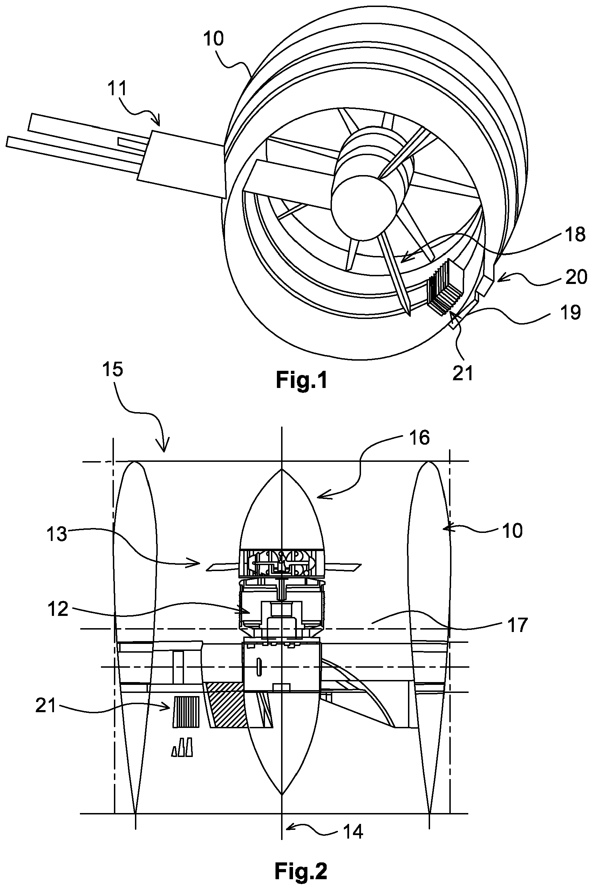

Les figures 1 et 2 montrent un ensemble de propulsion électrique hybride pour un avion selon un mode de réalisation préféré de l'invention.

Cet ensemble de propulsion comprend une nacelle 10 destinée à être assemblé au moyen d'une liaison mécanique 11 telle qu'un mât à un élément de structure d'un aéronef. A titre purement illustratif, cet élément de structure pourrait être un élément de voilure de l'aéronef, l'ensemble étant par exemple placé à l'extrémité de cet élément de voilure. Cet ensemble pourrait toutefois être accroché en un autre point de l'élément de voilure de cet aéronef.

La nacelle 10 comporte un capot de nacelle 10 délimitant un volume intérieur dans lequel est placé un moteur 12 électrique entraînant une soufflante 13, implantée à l'avant de ce moteur 12 électrique. La nacelle 10 est disposée coaxialement autour du moteur 12 électrique selon un axe longitudinal 14.

De manière simplifiée, cet ensemble de propulsion aspire de l'air extérieur au niveau d'une entrée d'air 15 de la nacelle 10 par l'intermédiaire de la soufflante 13 qui comporte une hélice carénée, cette soufflante 13 comprenant un cône d'entrée 16. Ce flux d'air aspiré et accéléré par la soufflante 13 est canalisé dans un espace annulaire 17 défini entre la surface extérieure du moteur 12 électrique et la paroi interne du capot de nacelle 10, vers une tuyère.

La nacelle 10 est directement reliée à l'extrémité de l'aile selon des techniques connues, permettant de reprendre les efforts dans toutes les directions. La nacelle 10 est reliée mécaniquement au moteur 12 électrique par un ou plusieurs jeux de bras 18, orientés sensiblement radialement par rapport à l'axe longitudinal 14.

La nacelle 10 présente, en outre, une surface extérieure continue, c'est-à-dire dépourvue de discontinuités sur au moins la moitié avant de sa longueur dans le sens de l'écoulement de l'air, pour favoriser un écoulement laminaire de l'air autour de la nacelle 10.

L'ensemble de propulsion comprend encore un système de contrôle comprenant un système électronique de puissance comportant un module électronique de puissance 19 et une carte de pilotage électronique 20 reliés à un échangeur 21 de chaleur pour évacuer les dissipations de puissance par effet Joule de ces éléments.

Alors que le module électronique de puissance 19 et la carte de pilotage électronique 20 sont logés dans le capot de la nacelle 10, l'échangeur 21 de chaleur est placé en saillie dans l'espace 17 annulaire séparant la surface extérieure du moteur 12 électrique de la surface intérieure du capot de la nacelle 10.

Il est ainsi possible de tirer pleinement avantage du flux d'air forcé généré par la soufflante 13 pour refroidir efficacement l'échangeur 21 de chaleur de ce qui permet d'optimiser en termes de masse et de volume de cet échangeur 21 de chaleur de sorte qu'il présente un poids limité au maximum.

## Revendications

1. Ensemble de propulsion électrique pour aéronef comprenant une nacelle (10) comportant un capot de nacelle délimitant un volume interne dans lequel est disposée une unité de propulsion électrique de l'aéronef comprenant une soufflante (13), un ensemble moteur (12) électrique placé après ladite unité de propulsion et relié à cette dernière pour alimenter en énergie électrique ladite unité de propulsion lorsqu'elle est en fonctionnement et un système de contrôle comportant un système électronique de puissance, l'espace délimité entre ledit ensemble moteur et ledit capot de nacelle définissant un conduit dans lequel est destiné à s'écouler un flux d'air créé par ladite soufflante (13) lorsqu'elle est en fonctionnement pour fournir une poussée audit aéronef, **caractérisé en ce que** :
- ledit système électronique de puissance comporte au moins un échangeur de chaleur permettant de transférer de l'énergie thermique dudit système vers un fluide de travail afin de refroidir ledit système ;
- ledit au moins un échangeur est placé au moins en partie en saillie dans ledit conduit de sorte que ledit fluide de travail est constitué dudit flux d'air généré par ladite soufflante (13) lorsqu'elle est en fonctionnement ; **caractérisé en ce que** la nacelle (10) définit un axe longitudinal et ledit ensemble moteur est relié à ladite nacelle par un ou plusieurs jeux de bras orientés radialement ou sensiblement radialement par rapport audit axe longitudinal, au moins certains desdits bras comportent au moins une écope de refroidissement pour dévier une partie du flux d'air créé par la soufflante (13) vers ledit ensemble moteur en vue de son refroidissement.

2. Ensemble selon la revendication 1, **caractérisé en ce que** ledit système électronique de puissance comprend un module électronique de puissance et une carte de pilotage électronique reliés audit au moins un échangeur de chaleur pour évacuer les dissipations de puissance par effet Joule de ces éléments, l'ensemble formé par ledit module et ladite carte étant logé dans ledit capot de nacelle.

3. Ensemble selon la revendication 1 ou 2, **caractérisé en ce que** ladite nacelle (10) définissant un axe longitudinal (14) et ledit ensemble moteur étant relié à ladite nacelle (10) par un ou plusieurs jeux de bras orientés radialement ou sensiblement radialement par rapport audit axe longitudinal, au moins les câbles mis en oeuvre pour les connexions électriques et/ou pour la transmission des signaux de commande passent dans au moins certains desdits bras.

4. Ensemble selon l'une quelconque des revendications 1 à 3, **caractérisé en ce que** ledit échangeur de chaleur comporte des ailettes, lesdites ailettes étant agencées de manière à être placées dans le sens d'écoulement du flux d'air créé par ladite soufflante (13) de manière à ne pas perturber celui-ci.

5. Ensemble selon l'une quelconque des revendications 1 à 4, **caractérisé en ce que** ledit système électronique de puissance comporte un dispositif de refroidissement complémentaire pour assurer son refroidissement.

6. Aéronef équipé d'au moins un ensemble de propulsion selon l'une quelconque des revendications 1 à 5.

## Patentansprüche

1. Elektrische Antriebsanordnung für ein Luftfahrzeug, die eine Gondel (10), die eine Gondelhaube aufweist, welche ein Innenvolumen definiert, in dem eine ein Gebläse (13) enthaltende elektrische Antriebseinheit des Luftfahrzeugs angeordnet ist, eine elektrische Motoranordnung (12), die nach der Antriebseinheit angeordnet und mit dieser verbunden ist, um die Antriebseinheit mit elektrischer Energie zu versorgen, wenn sie in Betrieb ist, und ein Kontrollsystem enthält, das ein Leistungselektroniksystem aufweist, wobei der zwischen der Motoranordnung und der Gondelhaube begrenzte Raum einen Kanal definiert, in dem ein Luftstrom fließen soll, der vom Gebläse (13) erzeugt wird, wenn es in Betrieb ist, um dem Luftfahrzeug einen Schub zu liefern, **dadurch gekennzeichnet, dass**:
- das Leistungselektroniksystem mindestens einen Wärmetauscher aufweist, der es ermöglicht, Wärmeenergie vom System zu einem Arbeitsfluid zu übertragen, um das System zu kühlen;
- der mindestens eine Tauscher zumindest zum Teil vorstehend im Kanal angeordnet ist, so dass das Arbeitsfluid aus dem vom Gebläse (13), wenn es in Betrieb ist, erzeugten Luftstrom besteht;
**dadurch gekennzeichnet, dass** die Gondel (10) eine Längsachse definiert und die Motoranordnung mit der Gondel durch einen oder mehrere Sätze von Armen verbunden ist, die radial oder im Wesentlichen radial bezüglich der Längsachse ausgerichtet sind, wobei mindestens bestimmte der Arme mindestens ein Kühlleitblech aufweisen, um einen Teil des vom Gebläse (13) erzeugten Luftstroms zur Motoranordnung zu ihrer Kühlung umzuleiten.

2. Anordnung nach Anspruch 1, **dadurch gekennzeichnet, dass** das Leistungselektroniksystem ein Leistungselektronikmodul und eine elektronische Steuerungskarte enthält, die mit dem mindestens einen Wärmetauscher verbunden sind, um die Verlustleistungen durch Joule-Effekt aus diesen Elementen abzuleiten, wobei die von dem Modul und der Karte gebildete Anordnung in der Gondelhaube untergebracht ist.

3. Anordnung nach Anspruch 1 oder 2, **dadurch gekennzeichnet, dass**, da die Gondel (10) eine Längsachse (14) definiert und die Motoranordnung mit der Gondel (10) über einen oder mehrere Sätze von Armen verbunden ist, die radial oder im Wesentlichen radial bezüglich der Längsachse ausgerichtet sind, mindestens die für die elektrischen Verbindungen und/oder für die Übertragung der Steuersignale verwendeten Kabel durch mindestens bestimmte der Arme verlaufen.

4. Anordnung nach einem der Ansprüche 1 bis 3, **dadurch gekennzeichnet, dass** der Wärmetauscher Lamellen aufweist, wobei die Lamellen so eingerichtet sind, dass sie in der Fließrichtung des vom Gebläse (13) erzeugten Luftstroms angeordnet sind, um diesen nicht zu stören.

5. Anordnung nach einem der Ansprüche 1 bis 4, **dadurch gekennzeichnet, dass** das Leistungselektroniksystem eine komplementäre Kühlvorrichtung zur Gewährleistung seiner Kühlung aufweist.

6. Luftfahrzeug, das mit mindestens einer Antriebsanordnung nach einem der Ansprüche 1 bis 5 ausgestattet ist.

## Claims

1. An electric propulsion assembly for an aircraft comprising a nacelle (10) comprising a nacelle cowl delimiting an internal volume in which there is placed an electric propulsion unit of the aircraft comprising a fan (13), an electric motor assembly (12) placed after said propulsion unit and connected thereto in order to supply said propulsion unit with electrical energy when it is operating and a control system comprising a power electronics system, the space delimited between said motor assembly and said nacelle cowl defining a duct through which a stream of air created by said fan (13) is intended to flow when said fan is operating to supply said aircraft with thrust, **characterized in that**
- said power electronics system comprises at least one heat exchanger allowing heat energy to be transferred from said system to a working fluid in order to cool said system, and **in that**
- said at least one exchanger is positioned so that it at least partially projects into said duct so that said working fluid consists of said stream of air generated by said fan (13) when it is operating,
**characterized in that** said nacelle (10) defines a longitudinal axis and with said motor assembly connected to said nacelle (10) by one or more sets of arms directed radially or substantially radially with respect to said longitudinal axis, at least some of said arms have at least one cooling scoop to deflect some of the stream of air created by said fan (13) toward said motor assembly with a view to cooling same.

2. The assembly as claimed in claim 1, **characterized in that** said power electronics system comprises a power electronics module and an electronic control board which are connected to said at least one heat exchanger so as to remove the power dissipated by these elements by Joule effect, the assembly formed by said module and said board being housed in said nacelle cowl.

3. The assembly as claimed in claim 1 or 2, **characterized in that**, with said nacelle (10) defining a longitudinal axis (14), and with said motor assembly being connected to said nacelle (10) by one or more sets of arms directed radially or substantially radially with respect to said longitudinal axis, at least the cables used for the electrical connections and/or for transmitting command signals pass through at least some of said arms.

4. The assembly as claimed in any one of claims 1 to 3, **characterized in that** said heat exchanger comprises fins, said fins being arranged so that they are positioned in the direction in which the stream of air created by said fan (13) flows so as not to disturb this flow.

5. The assembly as claimed in any one of claims 1 to 4, **characterized in that** said power electronics system comprises an additional cooling device in order to cool same.

6. An aircraft equipped with at least one propulsion assembly as claimed in any one of claims 1 to 5.
